# EUROPEAN PATENT SPECIFICATION

(11) **EP 2 411 750 B1**
(45) Date of publication and mention of the grant of the patent: **24.07.2019**
(21) Application number: 10709806.3
(22) Date of filing: 17.03.2010
(51) Int. Cl.: F27B 3/08, F27B 3/28, F27D 11/10, H05B 7/10

(54) **APPARATUS FOR MEASURING THE POSITION OF THE ELECTRODES IN AN ELECTRIC FURNACE**
VORRICHTUNG ZUM MESSEN DER POSITION DER ELEKTRODEN IN EINEM ELEKTROOFEN
APPAREIL POUR MESURER LA POSITION DES ÉLECTRODES DANS UN FOUR ÉLECTRIQUE

(30) Priority: 25.03.2009 IT MI20090470
(43) Date of publication of application: 01.02.2012
(73) Proprietor: Tenova S.p.A., 20149 Milano (IT)
(72) Inventor: CLERICI, Paolo, I-22071 Cadorago-Como (IT); RONDINA, Salvatore, I-20010 Bareggio-Milano (IT)
(74) Representative: Martegani, Franco
(86) International application number: PCT/EP2010/001698
(87) International publication number: WO 2010/108625

(56) References cited:
- WO-A-01/88472
- GB-A- 2 028 619
- JP-A- 2 298 791
- US-A- 5 539 768
- US-A- 5 638 398
- US-B1- 6 377 604
- KLAUS TIMM ET AL: "Schwingungsverhalten von Elektroden und Tragarmen in Lichtbogenöfen = Dynamic behaviour of electrodes and supporting arms in arc furnaces" STAHL UND EISEN, VERLAG STAHLEISEN, DUSSELDORF, DE, vol. 98, no. 14, 13 July 1978 (1978-07-13) , pages 695-700, XP001537303 ISSN: 0340-4803

## Description

The present invention relates to an apparatus for measuring the position of the electrodes in an electric furnace.

In the field of electric furnaces for the melting of scrap, it is important to know the position of the electrodes inside the furnace with respect to the scrap and subsequent bath. Such a system for positioning of electrodes involving a laser pointer installed within the electrode support arm is disclosed in US-B 6 377 604.

It is known that the first functioning phase of an electric arc furnace is dedicated to the heating and melting of scrap whether the latter be inserted with the continuous or batch feeding method. In this phase, on one side there is a liquid bath, both residual of the previous cycle and in rapid growth due to the melting of the scrap. On the other side, there is the presence of large quantities of conductive materials still solid, which enter into contact with the electrodes, which prevents the use of electric energy absorption sensors for controlling the position of the arms.

In this phase, it is necessary to adopt an external measuring method for defining the presumed optimum position of the arms (and therefore electrodes).

The subsequent "flat bath" phase, i.e. without the presence of solid phases but with a layer of foamy slag incorporating the arc, can be only be effectively carried out by calibrating the position of the electrodes and then optimizing the supply of electric energy to the system. In this subsequent phase, measuring system of the current is much more reliable for stabilizing the energy supply but the optimum value of this supply cannot disregard the arc length and therefore an effective determination of the position of the electrodes. It is consequently evident that even in flat bath conditions, the optimization of the energy transfer (a condition for enabling the production cycle times to be reduced) cannot exclude an integration of the current and position measurements.

From a historical point of view, metallurgy based on EAF has always left ample space for the capacity of the operators in charge of the operations.

The overall productivity of the line was to a large extent associated with the ability of the latter to "centre" the optimum functioning conditions of the furnace during the various phases.

The current trend, on the other hand, is to automate the whole processing cycle, directing the treatment on the basis of objective verifications and reliable measurements. Especially during the refining treatment, the energy transfer is mostly sustained by electric energy mediated by the electrodes.

The two most important independent parameters for mediating this exchange of energy are the length of the are and the intensity of the passing current. It is therefore obvious that current research is based on the development of measuring and control systems of the position of the electrodes and electric supply.

Among these, the position control has been underestimated, considering it almost banal or resolvable with relatively simple, inexpensive systems, but up to now without obtaining a valid solution.

In this respect, numerous attempts have been made in recent years for finding a solution to the problem.

Most of them are concentrated on the application of position reading instruments by means of a position encoder with two variants: rack encoder positioned on the electrode-holder column and wire encoder (the measurement system is positioned at a distance and controlled by a return system of the movement of the electrodes).

The encoder technology is the most consolidated for revealing the position in an industrial environment. It derives from numerical control machines which have become increasingly more complex up to the point of being actual robots. The many successes obtained in numerous industrial realities and fields are mainly based on an enviable guarantee of quality and repeatability of the measurements.

Unfortunately the application of this technique to the problem of measuring the position of the electrode-holder column/arm has never kept the potential promises made.

An electromagnetic environment extremely polluted by atmospherics, an invasive presence of liquids (oils, fats, water) and powder have the joint effect of irreparably damaging and deteriorating the systems based on encoders after a few hours of functioning.

The underestimation of the problem of measuring the position of the electrodes has so far inhibited resort to more reliable systems and strategies, even if more costly.

The problem of accurately and industrially reliably revealing the position of the electrode-holder column (vertical) or the arm (horizontal) in which the clamps that grip the electrodes in electric arc furnaces are fixed, has difficulties which have not yet been overcome mainly due to the operating environment (powder, fat, falling materials).

The usefulness of this position measurement, on the other hand, i.e. the distance of the work point of the arm with respect to a fixed reference arbitrarily established as reference position of the relative movement, is significant. This can be both for the purpose of improving the efficiency of the regulation system of the electric work point of the electrode with respect to the charge to be melted and also for obtaining important information concerning the state of the process. In particular, to combine the stabile position at the beginning of the molten bath phase or the completion of the melting phase of the charge with the beginning of the refining phase.

A general objective of the present invention is to solve the above drawbacks of the known art in an extremely simple, economical and particularly functional manner.

Another objective is to provide a system which also functions in the presence of obstacles implicit in the treatment of scrap, i.e. oils, fats, water and powder.

A further objective is to provide an apparatus which can be easily applied also in the presence of a particularly hostile environment such as that of a functioning electric furnace.

In view of the above objectives, according to the present invention, an apparatus has been conceived for measuring the position of the electrodes in an electric furnace having the characteristics specified in the enclosed claims.

According to the invention, an apparatus is envisaged for measuring the position of the electrodes in an electric furnace without direct contact with the electrodes connected with the line/furnace management system by extremely high electromagnetic sound rejection lines. A measuring instrument is used based on at least one laser, preferably tuned in to frequencies not strongly influenced by the environment (oils, fats, water, etc.) and coupled with a reflector verification instrument of any representative (and synchronous) nature with the position of the electrodes. The laser is suitably installed and protected to obtain the position measurement with the required precision and at the same time to transfer the data obtained safely and reliably, for example by resorting to digital or optical fibre transmissions.

The structural and functional characteristics of the present invention and its advantages with respect to the known art will appear even more evident from examining the following description, referring to the enclosed drawings, which among other things show a schematization of an embodiment of the measuring apparatus of the position of the electrodes in an electric furnace produced according to the invention itself. In the drawings:
- figure 1 shows a schematic and synthetic view of an apparatus according to the present invention for measuring the position of the electrodes in an electric furnace,
- figure 2 shows a laser emission group as envisaged in figure 1.

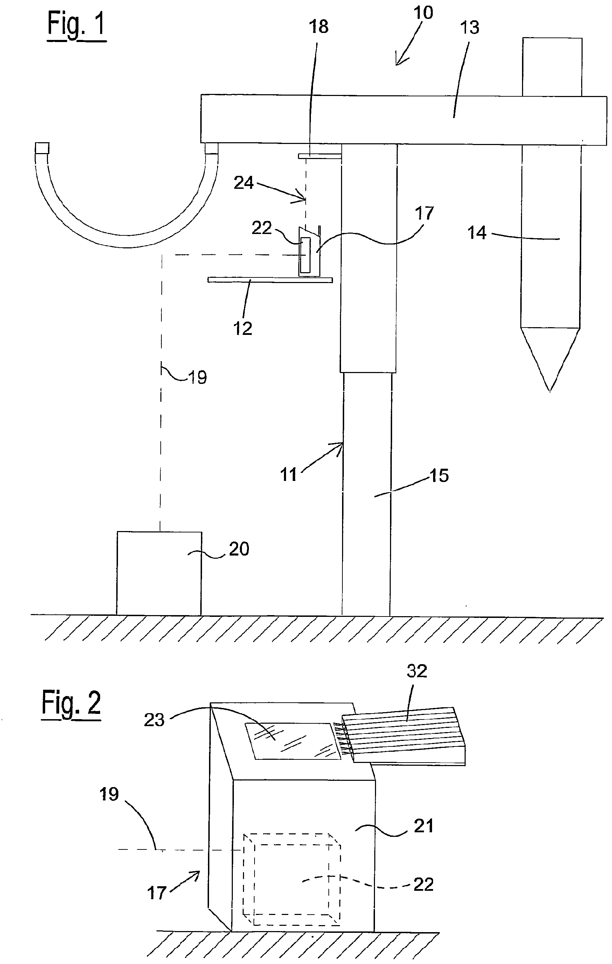

With reference to figure 1, this illustrates a schematic view of an electrode-holder column 10 comprising a lifting group 11, integral on one side with a base structure 12 and carrying an electrode-holder arm 13 containing at least one electrode 14 immersed in a bath and/or in contact with scrap (not all shown but known).

The lifting group 11 of the electrode-holder arm 13 comprises a lifting cylinder 15 and a piston with a moveable column 16 which allows the movement of the electrodes 14.

According to the present invention, a measuring apparatus of the position of the electrodes in an electric furnace is envisaged, comprising a laser group 17 positioned on at least a part of the base structure 12. The laser group 17 collaborates and is interfaced with a reference element such as a plate 18 integral, in this embodiment, with the movable column piston 16 and in any case with the electrode 14. This reference element 18, however, can be integral with the electrode 14 or integral with the electrode-holder arm and is capable of reflecting the laser radiation emitted from the laser group 17 and striking it.

Figure 1 schematically shows a connection line 19 with an electronic analysis and management unit of the furnace, schematized in 20, for example with digital or optical fibre transmission. The electronic analysis apparatus for the formation of the measurement which could be positioned directly in a box 21 of the laser group 17 containing a laser 22 or also in a remote position, is intentionally not specified in the example. In this case, the information is mediated directly by optical fibres. Figure 2 shows the protective box 21 of the laser 22 with protective glass 23 from which a laser beam 24 is emitted, which strikes the reference element or plate 18. A ventilator 32 is situated near the glass, which feeds an air flow above the protective glass thus keeping it clean.

All the important characteristics forming part of the present invention are defined in the claims on file.

According to the invention, a sensor system is therefore produced, without direct contact with the electrode, connected with the line/furnace management system through extremely high electromagnetic sound rejection lines.

In practice, it can be seen that according to the invention, as already mentioned, a measuring instrument is used, based on at least one laser preferably, tuned in to frequencies not strongly influenced by the environment (oils, fats, water, etc.) and coupled to communicate with any kind of reflector, which could also possibly be a part of the same structure of the electrode-holder arm, which acts as reference element. It is important that this reference element is always representative of and synchronous with the position of the electrode.

It can also be seen that the laser is appropriately installed and protected to obtain the position measurement with the required precision and at the same time to transfer the data obtained safely and reliably, for example by resorting to digital or optical fibre transmissions.

It can also be seen that the laser beam emitter is installed in a protective box whereas the crosscheck or reference element for obtaining the distance measurement from which the position of the electrode-holder column/arm derives, is positioned so that the same measurement is always active (without the risk of possible blackouts or danger for the operators) under the various operative conditions of the plant.

It can also be seen how the schematic example described above illustrates the components of the measurement system and the operating principle of the same.

An apparatus according to the invention installed in a steelworks demonstrates the possibility of obtaining significant industrial advantages with respect to both the optimization of the functioning of the electrode regulation and also with respect to effecting the metal-work process itself.

The measurement of the position, in fact, allows a "measured" return of the effect of the downward or upward movement command to be obtained, in this way allowing possible drifts of the hydraulic and mechanical organs delegated for effecting the movement of the electrode column/arm, to be revealed a priori.

The information on the position revealed with the laser enters directly into the electronic unit which effects the regulation allowing the functioning of the regulation to be optimized, which leads to energy saving and a reduction in the risk of breakage of the same electrodes in addition to preventing maintenance and/or calibration interventions.

Furthermore, the same measurement revealed could be sent to the control unit of the process and, combined with other information (for example the electric harmonics), to provide a more precise definition of the instant in which the charge can be considered completely melted and consequently the refining process can be initiated.

During the various phases of the process, the apparatus for measuring the position of the electrodes functions in continuous with the laser 22 always active as it is also always kept functioning by the air flow fed from a ventilator 2 which guarantees the cleaning of the protective glass 23. The measurement information revealed by the apparatus is sent in continuous to the electronic analysis and management unit of the furnace 20 by means of the connection 19. The measurement revealed is thus used in the various process phases:
- During the batch loading phase (crate of scrap or similar) or maintenance, the vault of the furnace is open and therefore the column 16 and electrode-holder arm 10 are rotated whereas the piston 15 keeps the electrode in the position of maximum height. In this phase, as the column is rotated, the verification means 18 will also be rotated and the measurement of the apparatus does not have any meaning.
- During the melting phase of the metallic charge of either the batch or continuous type, the measurement of the apparatus is processed by the electronic unit and sent in continuous to the electrode position regulation system allowing a direct measurement to be obtained of the effect of each movement command given by the same regulator. The measurement of the position of the electrode allows the regulation parameters to be adapted and the correct functioning of the hydraulic and mechanical organs to be punctually and continuously verified during the same process.
- During the molten bath and refining phase of the same, the measurement of the electrode position of the apparatus is used in correlation with the current values to verify the length of the arc and optimize the energy transfer to the bath. The variation of the measurement also provides a precise indication of the consumption of the electrode tip also allowing a comparison of the consumption between various process situations.
- During the tapping phase and preparation of the oven for the charge until the moment prior to the possible opening of the furnace vault, with the consequent rotation of the electrode column, the measurement of the apparatus is registered by monitoring.

The objective specified in the preamble of the description has therefore been achieved.

The forms of the structure for the embodiment of an apparatus for measuring the position of the electrodes in an electric furnace of the invention, as also the dimensions and assembly modes, can obviously differ from those shown for purely illustrative and non-limiting purposes in the invention,

The protection scope of the present invention is therefore delimited by the enclosed claims.

## Claims

1. An apparatus for measuring the position of the electrodes in an electric furnace which envisages an electrode-holder column (10), comprising a lifting group (11), integral with a base structure (12) and carrying an electrode-holder arm (13) containing at least one electrode (14) immersed in a bath and/or in contact with scrap, **characterized in that** it comprises at least one laser group (17) positioned on at least a part of the base structure (12) which collaborates with a reference element (18) integral with the at least one electrode (14),or said reference element (18) consists of a plate integral with a moveable part of said lifting group (11) or said reference element (18) is integral with said electrode-holder arm (13),said reference element (18) reflecting a laser radiation emitted by said laser group (17) for controlling the position of said electrode (14) inside said bath and/or in contact with said scrap.

2. The apparatus according to claim 1, **characterized in that** said at least one laser group (17) comprises a containment box (21) of a laser (22) provided with protective glass (23) from which a laser beam (24) is emitted which strikes against said reference element (18).

3. The apparatus according to claim 1 or 2, **characterized in that** said at least one laser group (17) is connected by means of a connection line (19) with an electronic analysis and management unit of the furnace (20).

4. The apparatus according to claim 3, **characterized in that** said connection line (19) is a digital or optical fibre transmission line.

## Patentansprüche

1. Vorrichtung zum Messen der Position der Elektroden in einem elektrischen Ofen, die eine Elektrodenhaltersäule (10) vorsieht, die eine Hebegruppe (11) umfasst, die einteilig mit einem Basisaufbau (12) ausgebildet ist und einen Elektrodenhalterarm (13) trägt, der zumindest eine Elektrode (14) enthält, die in ein Bad getaucht ist und/oder in Kontakt mit einem Abfall steht, **dadurch gekennzeichnet, dass** sie zumindest eine Lasergruppe (17) umfasst, die an zumindest einem Teil des Basisaufbaus (12) positioniert ist und mit einem Referenzelement (18) zusammenwirkt, das einteilig mit der zumindest einen Elektrode (14) ausgebildet ist oder das Referenzelement (18) aus einer Platte einteilig mit einem bewegbaren Teil der Hebegruppe (11) besteht oder das Referenzelement (18) einteilig mit dem Elektrodenhalterarm (13) ist, wobei das Referenzelement (18) eine von der Lasergruppe (17) emittierte Laserstrahlung zum Steuern der Position der Elektrode (14) innerhalb des Bades und/oder in Kontakt mit dem Abfall reflektiert.

2. Vorrichtung nach Anspruch 1, **dadurch gekennzeichnet, dass** die zumindest eine Lasergruppe (17) einen Aufnahmekasten (21) für einen Laser (22) umfasst, der mit einer Schutzscheibe (23) versehen ist, von der ein Laserstrahl (24) emittiert wird, der auf das Referenzelement (18) trifft.

3. Vorrichtung nach einem der Ansprüche 1 oder 2, **dadurch gekennzeichnet, dass** die zumindest eine Lasergruppe (17) mittels einer Verbindungsleitung (19) mit einer elektronischen Analyse- und Verwaltungseinheit des Ofens (20) verbunden ist.

4. Vorrichtung nach Anspruch 3, **dadurch gekennzeichnet, dass** die Verbindungsleitung (19) eine digitale Übertragungsleitung oder eine Glasfaserübertragungsleitung ist.

## Revendications

1. Appareil pour mesurer la position des électrodes dans un four électrique qui comporte une colonne de support d'électrode (10), comprenant un groupe de levage (11), solidaire d'une structure de base (12) et portant un bras de support d'électrode (13) contenant au moins une électrode (14) immergée dans un bain et/ou en contact avec des résidus, **caractérisé par le fait qu'**il comprend au moins un groupe laser (17) positionné sur au moins une partie de la structure de base (12) qui collabore avec un élément de référence (18) solidaire de l'au moins une électrode (14), ou ledit élément de référence (18) consiste en une plaque solidaire d'une partie mobile dudit groupe de levage (11), ou ledit élément de référence (18) est solidaire dudit bras de support d'électrode (13), ledit élément de référence (18) réfléchissant un rayonnement laser émis par ledit groupe laser (17) pour commander la position de ladite électrode (14) à l'intérieur dudit bain et/ou en contact avec lesdits résidus.

2. Appareil selon la revendication 1, **caractérisé par le fait que** ledit au moins un groupe laser (17) comprend une boîte de confinement (21) d'un laser (22) muni d'un verre de protection (23), à partir de laquelle est émis un faisceau laser (24) qui est incident sur ledit élément de référence (18).

3. Appareil selon la revendication 1 ou 2, **caractérisé par le fait que** ledit au moins un groupe laser (17) est relié, au moyen d'une ligne de liaison (19), à une unité électronique d'analyse et de gestion du four (20).

4. Appareil selon la revendication 3, **caractérisé par le fait que** ladite ligne de liaison (19) est une ligne de transmission à fibre optique ou numérique.
